## Europäisches Patentamt

## European Patent Office

## Office européen des brevets

(19)

(11) Veröffentlichungsnummer: **0 011 883**

**A1**

# EUROPÄISCHE PATENTANMELDUNG

(12)

(21) Anmeldenummer: **79200558.9**

(22) Anmeldetag: **02.10.79**

(51) Int. Cl.³: **B 29 F 3/10**
**B 05 D 7/14, B 05 D 7/20**

(30) Priorität: **01.12.78 DE 2852001**

(43) Veröffentlichungstag der Anmeldung:
**11.06.80 Patentblatt 80 12**

(84) Benannte Vertragsstaaten:
**AT BE CH DE FR GB IT LU NL SE**

(71) Anmelder: **METALLGESELLSCHAFT Aktiengesellschaft**
**Reuterweg 14**
**D-6000 Frankfurt am Main 1(DE)**

(72) Erfinder: **Scheiber, Werner, Dr.**
**Fichardstrasse53**
**D-6000 Frankfurt am Main(DE)**

(72) Erfinder: **Aalrust, Per Otto, Dipl.-Chem.**
**Kesselhutweg 6**
**D-6100 Darmstadt(DE)**

(74) Vertreter: **Fischer, Ernst, Dr.**
**Reuterweg 14**
**D-6000 Frankfurt am Main 1(DE)**

(54) **Verfahren zum Ummanteln von rotationssymmetrischen, metallischen Formkörpern.**

(57) Verfahren zum Ummanteln von rotationssymmetrischen, metallischen Formkörpern (1) mit festhaftenden Kunststoffen durch Extrusion, dadurch gekennzeichnet, daß man vor der ummantelnden Kunststoff-extrusion den metallischen Formkörper (1) mit einem wärmehärtenden Haftvermittler versieht, diesen unmittelbar vor dem Extruder (6) einbrennt und den noch heißen metallischen Formkörper (1) mit dem eingebrannten Haftvermittler zur Kunststoffummantelung durch den Extruder (6) führt.

EP 0 011 883 A1

Croydon Printing Company Ltd.

Fig.2

METALLGESELLSCHAFT AG  
Reuterweg 14  
6000 Frankfurt/M. 1

29. November 1978  
DRLA/CPA

Prov. Nr. 8371 LT

## Verfahren zum Ummanteln von rotationssymmetrischen, metallischen Formkörpern

Die Erfindung betrifft ein Verfahren zum Ummanteln von rotationssymmetrischen, metallischen Formkörpern mit festhaftenden Kunststoffen durch Extrusion.

Es ist bekannt, rotationssymmetrische Endlosformkörper, wie Drähte oder Rohre durch Koextrusion mit Kunststoffen zu ummanteln. Dabei wird Kunststoffgranulat im Extruder erschmolzen und durch eine Ringdüse auf den zu beschichtenden Endlosformkörper als Schmelze aufgebracht. (G. Schulz, Die Kunststoffe, (1964), Seite 341; DT-OS 1915892).

Bei dieser Verfahrensweise gelingt es nicht, einen festhaftenden Verbund zwischen der zum Kunststoffilm erkalteten Kunststoffschmelze und der Metalloberfläche zu erzielen.

Aus diesem Grunde werden Zwischenschichten aus Klebern oder auf Asphaltbasis zwischen dem Kunststoffmantel und der Metalloberfläche vor der Koextrusion des Kunststoffes appliziert, um auf diese Weise die Metalloberfläche bei einer Unterwanderung des Kunststoffilms durch Wasser zu schützen.

Es ist auch bereits vorgeschlagen worden, haftvermittelnde Zwischenschichten aus Phenolharzen unter Zusatz von Kieselsäuren anzuwenden und auf diese Polyoefinpulver aufzuschmelzen. Auf diese Weise werden heißwasserbeständige Überzüge erhalten (DT-PS 19 06 299).

Auch ist es bekannt, die Metalloberfläche vor der Koextrusion auf elektrolytischem Wege zu verzinken und die Zinkschicht durch eine Chromatisierung zu immunisieren. Auch durch diese Maßnahme wird allerdings kein Haftverbund zwischen dem Kunststoff-Film und der Metalloberfläche erzielt.

Der Erfindung liegt die Aufgabe zugrunde, diese und andere Nachteile zu vermeiden, und einen Weg aufzuzeichnen, durch welchen festhaftende Kunststoffschichten durch Koextrusion erzielt werden können.

Diese Aufgabe wird erfindungsgemäß dadurch gelöst, daß man vor der ummantelnden Kunststoffextrusion den metallischen Formkörper mit einem wärmehärtenden Haftvermittler versieht, diesen unmittelbar vor dem Extruder einbrennt und den noch heißen metallischen Formkörper mit ein eingebrannten Haftvermittler zur Kunststoffummantelung durch den Extruder führt.

Nach einer bevorzugten Ausgestaltung der Erfindung verfährt man so, daß man nach dem Einbrennen des Haftvermittlers einen dem im Extruder erschmolzenen Kunststoff gleichartigen oder ähnlichen pulverförmigen Kunststoff, auf dem vom Einbrennen des Haftvermittlers noch heißen metallischen Formkörper in dünner Schicht aufschmilzt und anschließend den noch heißen metallischen Formkörper mit einer Temperatur, die unter dem Erstarrungspunkt des pulverförmig aufgebrachten Kunststoffes liegt, in den Extruder einführt.

Im Rahmen der Erfindung ist es besonders günstig, den gleichartigen oder ähnlichen Kunststoff, d.h. einen Kunststoff, der dem zu extrudierenden Kunststoff in seinen chemischen und physikalischen Eigenschaften ähnlich ist, mit

0011883

Hilfe eines turbulenten Luftstroms auf dem noch heißen metallischen Formkörper aufzuschmelzen und den Pulverüberschuß abzusaugen. Bei Bedarf kann sodann der metallische
Formkörper ein weiteres Mal erhitzt werden.

Das Verfahren und eine zweckmäßige Vorrichtung zur Durchführung dieses Verfahrens ist beschrieben worden (OE-PS
323.860).

Der pulverförmige Kunststoff kann aber auch in an sich bekannter Weise elektrostatisch aufgebracht und verschmolzen
werden. Als wärmehärtender Kunststoff hat sich ein Mischpolymerisat aus Vinylchlorid und Vinylacetat mit Maleirsäureanhydrid und niedermolekularem Epoxidharz bewährt.

Auch ein wärmehärtender Kunststoff auf Phenolharzbasis mit
einem Zusatz kolloidaler Kieselsäure, wie er beispielsweise
in der DT-PS 1 906 299 beschrieben ist, kann im Rahmen der
Erfindung mit Erfolg angewendet werden.

Diese Kunststoffe werden zweckmäßig in an sich bekannten
Lösungsmitteln, wie Ester, Ketone, aromatischen Kohlenwasserstoffen, gelöst bzw. dispergiert.

Als zu ummantelnder Kunststoff werden erfindungsgemäß Polyolefine, insbesondere Polyäthylen, eingesetzt. Auch Mischpolymerisate des Äthylens oder Mischpolymerisate auf Basis
Vinylchlorid und/oder Vinylacetat können im Rahmen der Erfindung erfolgreich verwendet werden, wobei diese Kunststoffe auch verschiedene, an sich bekannte Zusätze enthalten können, wie Weichmacher, Pigmente und Füllmittel.

Das erfindungsgemäße Verfahren zeigt einen Weg auf, durch
welchen festhaftende Kunststoffschichten durch Koextrusion
erzielt werden können. Diese Kunststoffschichten können

durch Warmwasser nicht unterwandert werden, so daß es zu keiner Unterrostung oder Ablösung des Kunststoff-Filmes kommen kann. Erfindungsgemäß wird vor der Koextrusion der zu beschichtende rotationssymmetrische Endlosformkörper mit einem wärmehärtenden (duroplastischen) Haftvermittler versehen, dieser durch Wärmebehandlung eingebrannt und der noch heiße Endlosformkörper unmittelbar nach dem Einbrennen des Haftvermittlers zur Koextrusion in den Extruder eingeführt.

Das erfindungsgemäße Verfahren ist in den nachfolgenden Zeichnungen und Beispielen näher erläutert:

In den Figuren bedeuten:

1 der zu ummantelnde metallische Formkörper;
2 Abrollhaspel; 3 Bad zum Aufbringen des Haftvermittlers;
4 Abdunststrecke mit Kamin; 5 Induktionsspule;
6 Extruder; 7 Kühlbad; 8 Aufwickelhaspel; 9 Säge;
10 Strahlkabine und 11 Kabine zum Aufbringen des pulverförmigen Kunststoffes durch einen turbulenten Luftstrom oder auf elektrostatische Weise.

Beispiel 1

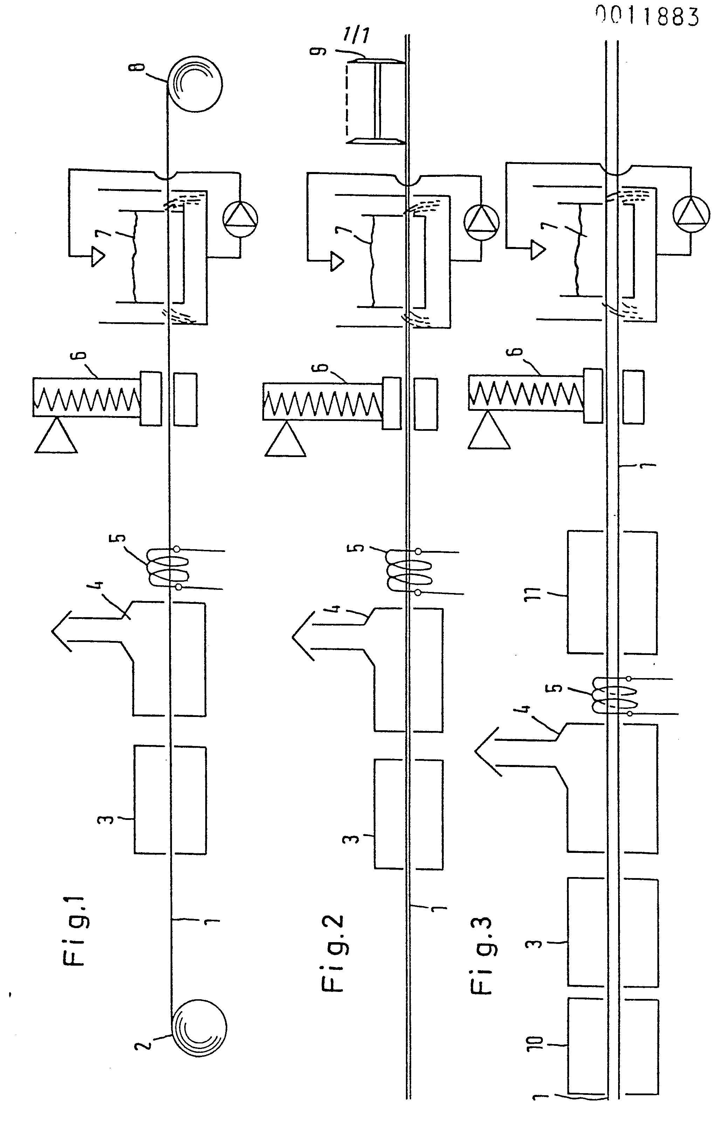

Gemäß Fig. 1 und einen nach DIN 177 verzinktem Stahldraht 1 von 2 mm ∅ auf der Haspel 2 abgerollt und kontinuierlich mit einem Haftvermittler, der durch Polymerisation aus Vinylchlorid, Vinylacetat und Maleinsäureanhydrid mit niedermolekularem Epoxidharz gewonnen wurde, und mit einem Festkörpergehalt von 35 % in einer Mischung organischer Lösungsmittel, bestehend aus Estern, Ketonen und aromatischen Kohlenwasserstoffen, gelöst ist, in 3 so behandelt, daß eine gleichmäßige Naßfilmstärke von 30 my erreicht wird. Nach dem Abdunsten der Lösungsmittel in einer Abdunststrecke 4 wird durch induktives Erwärmen mittels Induktionsspule 5 des Stahldrahtes auf 315°C der Haftvermittler eingebrannt. Auf dem Wege von der Induktionsspule zum Extruder 6 kühlt der Draht bis auf 200°C wieder ab. Im Extruder 6 wird der Draht mit einem grünpigmentierten Weich-PVC mit einem K-Wert von 71,2 bei einer Temperatur von 218°C durch Koextrusion in einer Schichtstärke von 1 mm ummantelt. Nach Verlassen des Extruders wird der heiße Draht in einem Wasserbad 7 wiederum abgekühlt und auf der Haspel 8 zu Ringen aufgewickelt. Der Draht durchläuft die Beschichtungsanlage mit einer Geschwindigkeit von 200 m/min.

Die Beschichtung weist eine so hohe Haftfestigkeit auf, daß sie mechanisch von der Metalloberfläche nicht mehr getrennt werden kann. Beim Schwitzwasserkonstantklimatest nach DIN 50017 konnte nach 1000 Stunden keine Haftverminderung festgestellt werden, beim Salzsprühtest nach DIN 50907 war weder eine Unterrostung noch eine Haftverminderung nach 1500 Stunden eingetreten.

Beispiel 2
_____

Gemäß Fig. 2 wird ein Stahlrohr 1 der Dimension 12 x 1, gemäß DIN 2391 in der Fertigungsstraße, in welcher es aus Endlosband geformt und geschweißt wurde, einer kontinuierlichen Außenverzinkung zugeführt. Die Herstellung des Rohres erfolgt mit einer Geschwindigkeit von 100 m/min. Das so erzeugte Endlosrohr wird von der kontinuierlichen Außenverzinkung nach dem Abkühlen auf gleiche Weise, wie in Beispiel 1 beschrieben, bei 3 mit Haftgrund versehen, der nach seinem Abdunsten in 4 auf induktivem Wege 5 eingebrannt wird. Anschließend wird das Rohr zur Ummantelung mit Kunststoff durch den Extruder 6 geführt, in Wasserbad 7 abgekühlt und durch eine mitlaufende Säge 9 auf gewünschte Länge abgeschnitten.

## Beispiel 3

Bei Beispiel 3 wird ein, wie bei Beispiel 2 und Fig. 2, hergestelltes Rohr mit gleicher Geschwindigkeit mit einem Haftvermittler auf Basis Phenolharz gemäß DT-PS 1 906 299 versehen. Der Haftvermittler wird bei einer Temperatur von 340°C eingebrannt. Nach dem Einbrennen des Haftvermittlers wird das Rohr mit einer Temperatur von 210°C in den Extruderkopf eingeführt. In diesem wird es mit Hochdruck-Polyäthylen mit einer Dichte von 0,919 g/cm$^3$, einem Schmelzindex $i_{2/190}$ von 1,2 g/10 min und einer Schmelztemperatur von 200°C ummantelt.

Es wird ein gleichmäßiger, festhaftender Kunststoffüberzug in einer Schichtstärke von 1 mm, der mechanisch vom Rohr nicht mehr abgeschält werden kann, erzielt. Diese Beschichtung verliert ihre Haftfestigkeit nach 1000 Stunden Schwitzwasserkonstantklimatest gem. DIN 50017 sowie bei 1500 Stunden im Salzsprühtest nach DIN 50907 nicht.

## Beispiel 4

Gemäß Fig. 3 werden geschweißte Stahlrohre nach DIN 2440 von 60 mm Ø und 4,0 mm Wandstärke und einer Länge von 8 m kontinuierlich durch Kupplungsstücke zu einem Endlosstrang 1 miteinander verbunden.

Anschließend werden sie in eine Strahlkabine 10 geführt, wo sie gemäß Entrostungsgrad 3 nach DIN 18364 durch Strahlung mit Korund von Fett, Zunder und anderen Verunreinigungen befreit werden. Sodann werden sie bei 3 mit einem Haftvermittler auf Phenolharzbasis gemäß DT-PS 1 906 299 in einer Naßschichtstärke von 30 my versehen. Nach dem Ablüften der Lösungsmittel in einer Abdunststrecke 4 werden die Rohre auf induktivem Weg 5 auf 230°C erwärmt und in eine Kabine 11, in welcher sie durch elektrostatisches Pulverbeschichten mit Polyäthylen mit einer Dichte von 0,940 g/cm$^3$, einem Schmelzindex $i_{2/190}$ von 30 g/10 min. in einer Schichtstärke von 80 my beschichtet werden, zugeführt. Auf dem Weg von der Beschichtungskabine bis zum Extruder 6 ist die 80 my starke Polyäthylen-Schicht erst durchgeschmolzen und sodann erstarrt. Das Rohr hat sich bei Eintritt in den Extruderkopf bis auf 90°C abgekühlt. Im Extruder 6 wird das Rohr sodann mit Polyäthylen, der Dichte von 0,919 g/cm$^3$, einem Schmelzindex $i_{2/190}$ von 1,2 g/10 min. bei der Temperatur von 208°C in einer Schichtstärke von 3 mm ummantelt. Nach Durchlaufen eines Wasserbades 7 werden die abgekühlten beschichteten Rohre wiederum entkuppelt.

Auf diese Art und Weise gelingt es, einen festhaftenden, dünnwandigen Polyäthylen-Überzug auf die Rohre zu erhalten. Dieser läßt sich nicht mehr mechanisch abschälen und verliert seine Haftfestigkeit beim Schwitzwasserkonstantklimatest nach DIN 50017 über 1000 Stunden nicht. Beim Salzsprühtest nach DIN 50907 konnte nach 1500 Stunden von einer verletzten Stelle her keine Unterwanderung bzw. Unterrostung festgestellt werden.

Patentansprüche

1. Verfahren zum Ummanteln von rotationssymmetrischen, metallischen Formkörpern mit festhaftenden Kunststoffen durch Extrusion, dadurch gekennzeichnet, daß man vor der ummantelnden Kunststoffextrusion den metallischen Formkörper mit einem wärmehärtenden Haftvermittler versieht, diesen unmittelbar vor dem Extruder einbrennt und den noch heißen metallischen Formkörper mit dem eingebrannten Haftvermittler zur Kunststoffummantelung durch den Extruder führt.

2. Verfahren nach Anspruch 1, dadurch gekennzeichnet, daß man nach dem Einbrennen des Haftvermittlers einen dem im Extruder erschmolzenen Kunststoff gleichartigen oder ähnlichen pulverförmigen Kunststoff, auf dem vom Einbrennen des Haftvermittlers noch heißen metallischen Formkörper in dünner Schicht aufschmilzt und anschließend den noch heißen metallischen Formkörper mit einer Temperatur, die unter dem Erstarrungspunkt des pulverförmig aufgebrachten Kunststoffes liegt, in den Extruder einführt.

3. Verfahren nach Anspruch 1 und 2, dadurch gekennzeichnet, daß man den pulverförmigen Kunststoff mit Hilfe eines turbulenten Luftstroms auf den noch heißen, metallischen Formkörper aufschmilzt, den Pulverüberschuß absaugt und die Oberfläche des metallischen Formkörpers gegebenenfalls ein weiteres Mal erhitzt.

0011883

4. Verfahren nach einen oder mehreren der vorhergehenden Ansprüche 1 bis 3, dadurch gekennzeichnet, daß man den pulverförmigen Kunststoff elektrostatisch aufbringt.

5. Verfahren nach einem oder mehreren der vorhergehenden Ansprüche 1 bis 4, dadurch gekennzeichnet, daß man als wärmehärtenden Kunststoff einen Kunststoff auf Basis Vinylchlorid, Vinylacetat und Maleinsäureanhydrid mit niedermolekularem Epoxidharz aufbringt.

6. Verfahren nach einem oder mehreren der vorhergehenden Ansprüche 1 bis 5, dadurch gekennzeichnet, daß man als wärmehärtenden Kunststoff einen Kunststoff auf Basis Phenolharz mit einem Zusatz von kolloidaler Kieselsäure aufbringt.

7. Verfahren nach einen oder mehreren der vorhergehenden Ansprüche 1 bis 6, dadurch gekennzeichnet, daß man als zu ummantelnden Kunststoff Polyolefine einsetzt.

8. Verfahren nach einem oder mehreren der vorhergehenden Ansprüche 1 bis 7, dadurch gekennzeichnet, daß man als zu ummantelnden Kunststoff Mischpolymerisate des Vinylchlorids mit Vinylacetat einsetzt.

Fig.1

Fig.2

Fig.3

Europäisches
Patentamt

EUROPÄISCHER RECHERCHENBERICHT

0011883
Nummer der Anmeldung

EP 79 200 558.9

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | DE - B - 2 026 814 (POLYFLEX SCHWARZ GMBH & CO.) <br> * Anspruch 1, Beispiele 1 bis 4 * <br> -- | 1 | B 29 F 3/10 <br> B 05 D 7/14 <br> B 05 D 7/20 |
| | AT - B - 310 430 (OESTERREICHISCH-ALPI-NE MONTANGESELLSCHAFT) <br> * Seite 2, Zeile 56 bis Seite 3, Zeile 5 * <br> -- | 2,3 | |
| D | DE - C - 1 906 299 (METALLGESELLSCHAFT AG) <br> * Anspruch 1 * <br> -- | 6,7 | RECHERCHIERTE SACHGEBIETE (Int. Cl.) |
| | GB - A - 1 426 572 (TAKIRON CO. LTD.) <br> * Anspruch 8 * <br> -- | 5 | B 05 D 7/00 <br> B 29 F 3/00 |
| A,D | DE - A - 1 915 892 (SÜDDEUTSCHE KABEL-WERKE) <br> * Anspruch 1 * <br> -- | | |
| A,D | AT - B - 323 860 (METALLGESELLSCHAFT AG) <br> * Ansprüche 1 bis 5 * <br> -- | | KATEGORIE DER GENANNTEN DOKUMENTE |
| A | DE - A - 2 222 911 (MANNESMANN AG) <br> * Anspruch 1 * <br> -- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| A | DE - A - 2 255 084 (MANNESMANN AG) <br> * Ansprüche 1 und 2 * <br> -- ./.. | | &: Mitglied der gleichen Patent-familie, übereinstimmendes Dokument |

X   Der vorliegende Recherchenbericht wurde für alle Patentansprüche erstellt.

| Recherchenort <br> Berlin | Abschlußdatum der Recherche <br> 19-02-1980 | Prüfer <br> BITTNER |
|---|---|---|

Europäisches
Patentamt

**EUROPÄISCHER RECHERCHENBERICHT**

Nummer der Anmeldung

0011883

EP 79 200 558.9
- Seite 2 -

| | **EINSCHLÄGIGE DOKUMENTE** | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| A | <u>DE - B1 - 2 633 764</u> (BAYER AG) <br><br> * Anspruch 1 * <br><br> ---- | | |
| | | | **RECHERCHIERTE SACHGEBIETE (Int. Cl.)** |